# EUROPÄISCHE PATENTSCHRIFT

(11) **EP 0 499 860 B1**
(45) Veröffentlichungstag und Bekanntmachung des Hinweises auf die Patenterteilung: **28.06.1995**
(21) Anmeldenummer: 92101634.1
(22) Anmeldetag: 31.01.1992
(51) Int. Cl.: G01F 15/04, G01F 15/06

(54) **Durchfluss-Messgerät**
Flowmeter
Débitmètre

(30) Priorität: 20.02.1991 DE 4105283
(43) Veröffentlichungstag der Anmeldung: 26.08.1992
(73) Patentinhaber: ULTRAKUST electronic GmbH, 94239 Gotteszell (DE)
(72) Erfinder: Böhm,, Alfred, W-8374 Viechtach (DE)
(74) Vertreter: Heim, Hans-Karl, Dipl.-Ing.

(56) Entgegenhaltungen:
- EP-A- 0 236 681
- DE-A- 3 821 967
- FR-A- 2 438 257
- GB-A- 2 231 668
- US-A- 3 909 599
- US-A- 4 085 287
- US-A- 4 523 460
- US-A- 4 700 568

## Beschreibung

Die Erfindung betrifft ein Durchfluß-Meßgerät der im Oberbegriff des Anspruchs 1 angegebenen Art, wie es etwa aus EP-A- 236 681 bekannt ist.

In Haushalt und Industrie sind Durchfluß-Meßgeräte in Gestalt von Gasmessern in großer Zahl im Einsatz. Darüberhinaus gibt es für eine Vielzahl von Anwendungsfällen in Industrie und Forschung Durchfluß-Meßgeräte zur Erfassung der Durchsatzmenge von sowohl Flüssigkeiten wie auch Gasen. Diese bekannten Durchfluß-Meßgeräte sind nahezu ausnahmslos mechanisch aufgebaut, und als Fühler zum Erfassen der Durchflußmenge des Fluids kommen in erster Linie Flügelräder zum Einsatz, und im Haushalt sind es überwiegend Balgengaszähler, die zur Ermittlung des von den Gaswerken gelieferten Heizgases verwendet werden.

Die Ankopplung des Fühlers oder Gebers an das Zählwerk erfolgt bei Gaszählern aus Dichtigkeitsproblemen und wegen des erforderlichen Explosionsschutzes über eine Magnetkopplung.

Die bekannten mechanisch arbeitenden Durchfluß-Meßgeräte weisen den Nachteil auf, daß sie auf Temperaturänderungen des Meßgases reagieren, d. h. diese Meßgeräte messen die mit Temperaturänderungen verbundene Volumenänderungen des Gases mit. Für den Verbraucher bedeutet dies, daß er abhängig von der bei ihm vorherrschenden Gastemperatur für gleiche Heizwerte unterschiedliche Gasvolumina verheizen muß, und deshalb mit Kosten belastet wird, die ausschließlich von einer Temperaturänderung des angelieferten Gases verursucht und damit durch nichts gerechtfertigt sind. Hierbei ist zu berücksichtigen, daß die Gaswerke Ferngas einkaufen, dessen Volumen und Kosten auf 15 Grad Celsius bezogen sind. Demgegenüber hat es sich in der Praxis gezeigt, daß bei den Ablesestationen der Abnehmer, die zumeist in der Nähe des Heizungskellers untergebracht sind, höhere Umgebungstemperaturen herrschen als 15 Grad Celsius. Experten geben Volumenschwankungen, die beim Abnehmer aufgrund höherer Gastemperatur auftreten, mit bis zu 10 % an.

Temperaturkompensierte Durchfluß-Meßgeräte der eingangs genannten Art sind zwar bereits seit langem bekannt, konnten sich jedoch aufgrund ihrer wenig zuverlässigen Arbeitsweise nicht durchsetzen. Temperatur- und sogar druckkompensierte Durchfluß-Meßgeräte sind beispielsweise in dem Übersichtsartikel "Druck- und Temperaturberichtigung für Durchfluß-Meßgeräte", Archiv für Technisches Messen (ATN), V 1245-2, Mai 1934 beschrieben. Das Durchfluß-Meßgerät der eingangs genannten Art ist in dieser Druckschrift im Kapitel "Kontaktgabeverfahren" beschrieben. Die Auswerteschaltung dieses bekannten Meßgerätes ist der Zeit entsprechend elektromechanisch ausgelegt und, wie bereits ausgeführt, bezüglich seiner Kompensationswirkung nur mäßig zuverlässig, weshalb sich dieses temperaturkompensierte Meßgerät in der Praxis auch nicht durchsetzen konnte.

Der vorliegenden Erfindung liegt das Ziel zugrunde, ein praxistaugliches, temperaturkompensiertes Durchfluß-Meßgerät zu schaffen, das gegebenenfalls auch mit einfachen Mitteln eine Druckkompensation zuläßt.

Ein weiteres Ziel der vorliegenden Erfindung besteht darin, das in Rede stehende Durchfluß-Meßgerät insbesondere für einen Einsatz betriebssicher auszugestalten, der eine zuverlässige und manipulationssichere Langzeitregistrierung der Durchflußmenge gewährleistet, wie sie beispielsweise für Gaszähler gefordert ist.

Wenn nachfolgend von "Gaszählern" die Rede ist, so nur aus Gründen der Anschaulichkeit. Die Erfindung ist jedoch keineswegs auf Gaszähler beschränkt. Diese stellen lediglich ein wesentliches Anwendungsgebiet der Erfindung dar. Ansonsten ist das erfindungsgemäße Durchfluß-Meßgerät grundsätzlich überall mit Vorteil einsetzbar, wo es auf eine präzise, temperatur- und gegebenenenfalls druckunabhängige Erfassung der Durchsatzmenge von Fluiden ankommt.

Erfindungsgemäß wird das genannte Ziel einer hohen Praxistauglichkeit der temperaturkompensierten Durchflußerfassung u.a. dadurch gelöst, daß anstelle der bekannten elektromechanischen Auswerteschaltung eine prozeßrechnergesteuerte Auswerteschaltung zum Einsatz kommt, wie es etwa auch aus der EP-A 236 681 bekannt ist. Eine derartige, mit modernen integrierten Schaltungen aufgebaute, und grundsätzlich in unterschiedlichster Weise realisierbare Auswerteschaltung weist außerdem den großen Vorteil auf, daß sie eine Vielzahl von Daten liefert, die neben einer Erfassung der Durchflußmenge eines Fluids problemlos auch weitere Anzeigen liefert, und außerdem die unterschiedlichsten Steuerungen externer Geräte sowie umgekehrt eine externe Steuerung der Auswerteschaltung ermöglicht.

Erfindungsgemäß wird das weitere Ziel einer betriebssicheren Langzeitregistrierung der Durchflußmenge dadurch gelöst, daß die prozessorgesteuerte Auswerteschaltung über unterschiedliche Schaltkreise zur Sicherstellung einer korrekten, eichtechnischen Belangen genügenden Durchflußermittlung verfügt. In erster Linie handelt es sich dabei um einen Schaltkreis zur Überwachung eines Betriebsspannungsabfalles, wobei die Erfassung eines derartigen Störfalles dazu führt, daß sämtliche vor dem Störfall aktuell ermittelten Daten in einem nicht flüchtigen Speicher abgelegt werden, wie es etwa aus der GB-A- 2 231 668 bekannt ist. Als weiterer Schritt wird dann ein Absperrventil betätigt wird, wenn der Störfall eine vorgegebene Zeit dauert und/oder ein vorgegebenes Ausmaß überschreitet. Zur späteren Feststellung sowie gegebenenfalls Beseitigung des Störfalls werden die vor dem Störfall aktuell ermittelten Daten zusammen mit Uhrzeit und Datum des Störfalls abgespeichert.

Andererseits kann es dann, wenn der Störfall für eine zuverlässige Durchflußermittlung nicht relevant ist, sei es, daß dieser Störfall entsprechend kurz oder entsprechend wenig ausgeprägt ist, vorgesehen sein, daß der normale Betrieb unmittelbar nach Beendigung des Störfalls fortgesetzt wird, wobei die im nicht flüchtigen Speicher niedergelegten Störfallvorkommnisse, beispielsweise zu Wartungsintervallen, überprüft werden, um den Funktionszustand des Durchfluß-Meßgeräts gegebenenfalls abzuklären.

Von Bedeutung ist die Erfassung von Störfällen, einschließlich eines Betriebsspannungsabfalls, sowie bei ernsten Störfällen eine Betätigung des Absperrventils auch mit Hinblick auf die Manipulationssicherheit des Durchfluß-Meßgerätes, vor allem eines als Haushaltsgaszähler eingesetzten Meßgerätes.

Unter dem Aspekt der Praxistauglichkeit ebenso wie unter dem Aspekt einer manipulationssicheren Langzeitregistrierung sind bei der Realisierung des erfindungsgemäßen Durchfluß-Meßgerätes noch eine Reihe weiterer Anforderungen zu erfüllen. Diese sollen nachfolgend dargestellt werden.

Die Temperatur des zu messenden Fluids ist an einer geeigneten Stelle zu erfassen, welche die Meßgenauigkeit des eigentlichen Durchflußfühlers, beispielsweise eines Flügelrades, nicht beeinflußt. Vorteilhafterweise erfolgt die Temperaturerfassung auf elektronischem Wege. Bei explosiven Fluiden, wie beispielsweise Heizgas, ist der Temperaturfühler vorteilhafterweise direkt außen am Mantel des Gasleitungsrohres anzubringen. Alternativ hierzu kann er jedoch auch in das zu messende Gas oder Fluid eingeführt werden, wobei die aktive, temperaturempfindliche Fühlerfläche so auszulegen ist, daß ein repräsentiver Temperaturquerschnitt des zu messenden Fluids erfaßt wird. Aus Sicherheitsgründen ist auch auf die Schutzart des Temperaturfühlers zu achten. Ferner sollte der Temperaturfühler eine hohe Ansprechgeschwindigkeit, eine hohe Langzeitstabilität und eine gute Reproduzierbarkeit aufweisen. Die für die Meßwertermittlung erforderliche Dämpfung beziehungsweise Mittelung der Meßwerte erfolgt dabei vorteilhafterweise in der Auswerteschaltung.

In jedem Falle ist vor allem beim Einsatz des erfindungsgemäßen Durchfluß-Meßgerätes als Gaszähler vorteilhafterweise eine externe Funktionskontrolle vorzusehen.

Das vorstehend beschriebene Störfall-Management wird in vorteilhafter Weise erweitert durch die Verwendung einer Pufferbatterie zur Überbrückung eines Betriebsspannungsabfalls. Als Pufferbatterie wird dabei ein Akkumulator eingesetzt, der über das Netz automatisch aufgeladen wird, wenn er nicht im Einsatz ist. Gemäß der Erfindung ist es vorgesehen, den Akkumulator über eine Ladeschaltung aufzuladen, die mit elektrischer Energie versorgt wird, welche durch einen mechanisch-elektrischen Wandler aus der Bewegung des mechanischen Durchflußfühlers gewonnen wird. Es läßt sich auch in besonders energiesparender Weise die Betriebsspannung für die Auswerteschaltung von der Bewegung des Durchflußfühlers ableiten, und zwar mit Hilfe einer Aufbereitungsschaltung, die an den mechanisch-elektrischen Wandler angeschlossen ist. Letzerer kann in unterschiedlicher Weise realisiert sein, beispielsweise in Gestalt eines Elektromagneten, in welchem aufgrund der Durchflußgeberbewegung eine Spannung induziert wird. Eine Anordnung zur Überbrückung eines Betriebsspannungsabfalls der vorstehend beschriebenen Art ist etwa aus der FR-A- 2 438 257 bekannt.

Die erfindungsgemäßen Maßnahmen zur Sicherstellung einer korrekten, eichtechnischen Belangen genügenden Durchflußermittlung, vor allem einer entsprechenden manipulationssicheren Langzeitregistrierung, umfassen die Auswerteschaltung vorteilhafterweise einen Schaltkreis zur Erfassung eines nicht ordnungsgemäßen Funktionsablaufs des Arbeitsprogramms der Auswerteschaltung, der bei Auftreten einer Störung das in einem Speicher abgelegte Arbeitsprogramm erneut startet.

Um die ermittelte Durchflußmenge auch mit Bezug auf den Fluiddruck kompensieren zu können, ist vorteilhafterweise ein Drucksensor vorgesehen, dessen Ausgangssignal in die Auswerteschaltung zusätzlich zu den Ausgangssignalen des Temperaturfühlers eingespeist werden.

Zu einer hohen Betriebssicherheit trägt bei der Messung explosiver Fluide vorteilhafterweise der Einsatz von Sicherheitsbarrieren bei, die zwischen der Auswerteschaltung und dem Temperatur- und gegebenenfalls Druckfühler angeordnet sind.

Wie aus Vorstehendem deutlich wird, eignet sich das erfindungsgemäße Durchfluß-Meßgerät besonders gut als Gaszähler in Haushalten, und zwar nicht nur aufgrund der hohen Betriebssicherheit sowie der Möglichkeit einer manipulationssicheren Langzeitregistrierung der Durchflußmenge, sondern auch deshalb, weil das prozessorgesteuerte Gerät ein bequemes Auslesen der Meßwerte gewährleistet, und zwar gegebenenfalls auch über eine Datenfernleitung, so daß die bisher üblich Ablesung durch Personal des Gaswerkes vor Ort entfallen kann.

Ganz besonders auch für den Einsatz als Gaszähler ist es von Vorteil, eine Mehrzahl der vorstehend beschriebenen Meßgeräte in einem Ring mittels eines Feldbusnetzes anzuordnen, an das jedes Meßgerät über eine Schnittstelle seiner Auswerteschaltung angeschlossen ist. Zur Erhöhung der Manipulationssicherheit ist es dabei von Vorteil, die Schnittstelle der Auswerteschaltung über ein Passwort abzusichern. Bei diesem Einsatz der Durchfluß-Meßgeräte in einem Feldbusnetz ist es vorteilhafterweise vorgesehen, die Stromversorgung für die Auswerteschaltung über die Feldbusschnittstelle vorzunehmen.

Nachfolgend soll die vorliegende Erfindung anhand der Zeichnung näher erläutert werden; in dieser zeigen:
- Fig. 1: ein schematisches Schaltbild des erfindungsgemäßen Durchflußgeräts und
- Fig. 2: die Adaption eines herkömmlichen mechanischen Durchflußmessers an das erfindungsgemäße Durchfluß-Meßgerät.

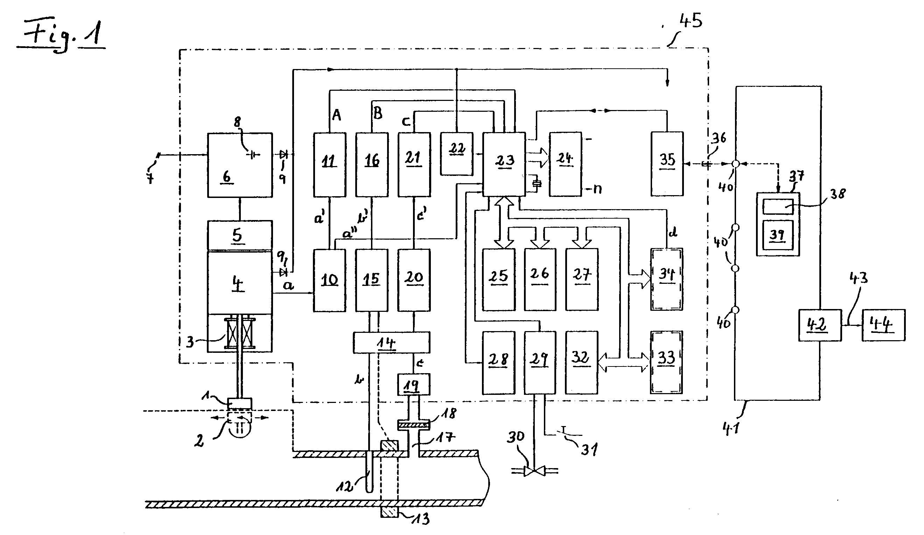

Fig. 1 zeigt in schematischer Weise ein temperatur- und gegebenenfalls druckkompensiertes Durchfluß-Meßgerät, welches an ein im Schnitt dargestelltes Rohrsystem angeschlossen ist, das von einem Fluid durchströmt ist, dessen Durchsatzmenge gemessen werden soll. Das dargestellte Durchfluß-Meßgerät umfaßt im Kern ein elektronisches Modul 45, dessen Bauteile in Fig. 1 von einem strichpunktierten Rahmen umschlossen sind, sowie an dem Rohr angeschlossene Meßfühler.

Ein Durchflußmengenfühler besteht bei dem dargestellten Ausführungsbeispiel aus einem Durchflußaufnehmer 2, der innerhalb des vom Fluid durchströmten Rohrs angeordnet ist, und von dem strömenden Fluid in Drehung versetzt wird. Diese Drehbewegung, die ein Maß für den Fluid-Durchsatz ist, wird durch einen mechanischen Aufnehmer 1 außerhalb des Rohres erfaßt.

Die Drehbewegung des Aufnehmers 1 wird in elektrische Signale umgewandelt. Im dargestellten Ausführungsbeispiel besteht der Wandler aus einer Spule 3, in welche durch die Welle des Aufnehmers 1 eine Spannung induziert wird. Die Ausgangssignale des Wandlers 3 werden einer Signalaufbereitungsschaltung 4 und auf einem Pfad a einer Auswerteschaltung zugeführt sowie in nicht mehr dargestellter Weise in eine Gleichspannung umgewandelt, die der Auswerteschaltung als Versorgungsspannung zugeführt wird, und die weiterhin an eine Ladeschaltung 5 angelegt wird.

Weiterhin ist ein Netzteil 6 vorgesehen, das dann die Spannungsversorgung der Auswerteschaltung übernimmt, wenn die mittels dem Wandler 3 und der Aufbereitungsschaltung generierte Versorgungsspannung nicht ausreicht, beispielsweise weil der Fluidstrom ungenügend ist. Das Netzteil 6 ist an eine externe Spannungsversorgung angeschlossen und umfaßt außerdem einen als Pufferbatterie ausgelegten Akkumulator 8. Der Akkumulator 8 übernimmt die Spannungsversorgung der Auswerteschaltung im Falle eines Ausfalls der externen Spannungsversorgung 7. Aufgeladen wird der Akkumulator im nichtaktiven Zustand durch eine Spannung, die ihm zur Verfügung gestellt wird über die Ladeschaltung 5, die von der Aufbereitungsschaltung 4 mit Spannung versorgt wird. Am Ausgang des Netzteils 6 sowie am Ausgang der Aufbereitungsschaltung 4 sind in an sich bekannter Weise Pufferdioden 9 angeordnet.

Das Signal a wird einer Signalaufbereitungsschaltung 10 zugeführt, die neben einer Filtereinheit zur Unterdrückung von Störsignalen zwei unterschiedliche Schwellwertschalter aufweist, mit denen aus dem Eingangssignal a ein Signal a′ und a˝ erzeugt wird. Der Zweck einer doppelten Schwellenbildung besteht darin, daß die Betriebsspannung in jedem Fall vor dem zu zählenden Impuls vorhanden ist, damit dieser Impuls sicher ermittelt werden kann. Das geberproportionale Impulssignal a′ wird einem Zähler 11 zugeleitet, während das Signal a˝ als "Wake up"- bzw. "Stand by"-Signal verwendet wird, das es erlaubt bei längeren Stillstandszeiten des Durchfluß-Meßgeräts, die verbunden sind mit einem Ausbleiben von Signalen vom Durchflußaufnehmer 2, einen "Power Down"-Modus hervorzurufen, um Energie zu sparen. Aus diesem "Schlafmodus" wird die Elektronik durch neu ankommende Impulse a geweckt oder alternativ hierzu durch eine geeignete Befehlseingabe über eine Tastatur 34 (Signal d) oder durch Befehle, die über eine Schnittstelle 35 eingegeben werden.

Der Inhalt des Zählers 11 wird einer Rechenlogik 23 zugeführt, die dazu dient, eine Größe A zu berechnen, welche der nicht temperaturkompensierten Durchflußmenge entspricht.

Ein Temperatursensor 12 dient zur Erfassung der Temperatur des strömenden Fluids. Der Fühler 12, der über Sicherheitsbarrieren 14 an die Auswerteschaltung angeschlossen ist, erstreckt sich durch das Rohr hindurch in das zu messende Fluid. Sicherheitsbarrieren sind Schutzschaltungen, die bei einer vorgegebenen Spannung lediglich einen bestimmten Stromfluß zulassen. Im einfachsten Fall wird eine Sicherheitsbarriere von einer Zenerdiode mit einem Reinwiderstand gebildet. Eine solche Sicherheitsbarriere ist auch bekannt als Zenerbarriere. Der Temperaturfühler 12 ist so ausgebildet, daß seine temperaturempfindliche Fläche auch einen Temperaturgradienten im Gasstrom zu erfassen vermag. Geeignet für diesen Zweck ist beispielsweise ein entsprechend langer Pt100-Drahtwendel, oder eine entsprechend großflächige temperaturempfindliche Halbleiterschicht. Für geringere Anforderung genügt auch eine punktuelle Erfassung der Fluidtemperatur.

Alternativ zu dem vom zu messenden Fluid umflossenen Temperatursensor 12 kann ein Temperatursensor 13 in Gestalt eines sogenannten Manschettenfühlers vorgesehen sein, welcher die Rohrleitung umspannt, und die Fluidttemperatur erfaßt, ohne in Kontakt mit dem Fluid zu stehen.

Das Temperaturmeßsignal vom Fühler 12 oder vom Fühler 13 wird nach Verlassen der Sicherheitsbarrieren 14 in eine Aufbereitungsschaltung 15 eingespeist, und das aufbereitete, verstärkte Signal b′ wird einem Analog/Digital-Wandler 16 zugeführt, der in einem vorgegebenem Takt die ankommenden Temperaturmeßwerte in rechnerkonforme digitale Signale umformt. Bevorzugt ist ein Wandler, der ohne externe Beschaltungen auskommt, und der mit einer eingebauten Referenzspannung oder Konstantstromquelle versehen ist, vor allem ein Wandler, der nach dem Prinzip der sukzessiven Approximation arbeitet.

Das aufbereitete digitale Signal B ist ein Maß für die erfaßte Fluidtemperatur und wird der Recheneinheit 23 parallel zu dem Signal A zugeführt, um die bestimmungsgemäße Kompensation des Meßvolumens auf die gemessene Temperatur durchzuführen.

Da auch der Fluiddruck als Eichgröße eingeht, ist bei dem dargestellten Ausführungsbeispiel des Durchfluß-Meßgerätes zusätzlich eine Druckentnahmestelle 17 vorgesehen. Die Druckentnahmestelle umfaßt eine Trennschicht 18 zwischen dem zu messenden Fluid und einen Druckaufnehmer 19, der wahlweise nach dem piezoresistiven Prinzip arbeitet und aus einer Druckmembrane besteht oder aus einer dünnen Siliziumschicht, die direkt in einen Chip integriert ist.

Das Druckmeßsignal c wird einer Aufbereitungsschaltung 20 zugeführt, und zwar ebenfalls auf dem Weg über die Sicherheitsbarriere 14. Das aufbereitete Signal c′ wird einem Analog-Digital-Wandler 21 zugeführt, der grundsätzlich ähnlich aufgebaut sein kann wie der Wandler 16. Alternativ hierzu kann auch ein einziger Wandler verwendet werden, der über einen Multiplexer, vorzugsweise einen gesteuerten Analog-Multiplexer zwischen dem Rechner 23 und den Ausgängen der Aufbereitungsschaltungen 15 und 20 umgeschaltet wird.

Auch das digitale Signal C, welches ein Maß für den gemessenen Fluiddruck darstellt, wird der Rechenlogik 23 parallel zu den beiden anderen Signalen A und B zugeführt, um die Durchflußmenge zusätzlich zur Temperatur auch mit Bezug auf den Druck zu kompensieren.

Eine Unterspannungserkennungsschaltung 22 ist an die die Versorgungsspannung führende Leitung angeschlossen und so gestaltet, daß ein Spannungseinbruch rechtzeitig detektiert wird. Die Schaltung 22 ist außerdem an die Recheneinheit 23 angeschlossen und veranlaßt diese im Falle eines Spannungseinbruchs, der einen Störfall darstellt, alle wichtigen Daten von einem Arbeitsspeicher 26, in welchem die aktuellen Meßdaten nicht resistent abgelegt sind, in einen nicht flüchtigen Speicher 27 zu überschreiben. Bei diesem Vorgang wird zusätzlich Zeit und Datum des Störfalls mit in den nicht flüchtigen Speicher 27 eingeschrieben, wobei diese Daten aus einer Echtzeituhr 32 stammen. Außerdem verursacht die Unterspannungserkennungsschaltung 22 in Abhängigkeit von der Zeitdauer des Störfalls sowie in Abhängigkeit des Ausmaßes des Störfalls die Betätigung eines Absperrventils 30, das in der vom zu messenden Fluid durchflossenen Rohrleitung angeordnet ist, und zwar über ein Ein-/Ausgabe-Interface 29. Durch diese Maßnahme wird erreicht, daß bei einem Spannungseinbruch keine Fehlfunktion hervorgerufen wird, die die Meßergebnisse verfälschen würde. Außerdem wird hierdurch erreicht, daß eine unerlaubte Manipulation an dem Durchfluß-Meßgerät nicht zum Erfolg führt.

Ein Adreßdecoder 24 übernimmt die Aktualisierung der einzelnen Schaltkreise des Moduls 45.

Ein Programmspeicher 25 enthält ein unveränderliches Arbeitsprogramm für das Modul 45 und ist vorzugsweise als ROM oder PROM ausgelegt.

Im Arbeitsspeicher 26 (RAM) werden die veränderlichen Meßdaten kontinuierlich gespeichert und bei Bedarf in den nicht flüchtigen Speicher 27 (NVRAM, EEPROMFLASHEEPROM) überschrieben, wie vorstehend ausgeführt.

In dem Speicher 27 werden auch alle benötigten Kalibrierdaten für das Durchfluß-Meßgerät abgelegt, die über ein Interface 35 eingegeben werden, das an die Recheneinheit 23 angeschlossen ist. Auch sonstige Kenndaten, wie Verbrauchernummer (im Falle der Verwendung des Meßgerätes als Gaszähler), Volumenzählerkennung und ähnliches werden hier abgelegt. Außerdem werden hier die Informationen abgelegt, die für das sogenannte "Zusammenlinken" der einzelnen Programm-Module im Programmspeicher relevant sind, wodurch ein spezifisches Arbeitsprogramm mittels einer "Down Load"-Funktion über die (serielle) Schnittstelle 35 geladen werden kann.

Um eine Unterbrechung des Arbeitsablaufs durch gegebenenfalls auftretende Störungen zu vermeiden, umfaßt das Modul 45, das im übrigen als integrierter Chip ausgebildet sein kann, eine sogenannte "Watchdog"-Schaltung, die sicherstellt, daß bei einem nicht ordnungsgemäßen Funktionsablauf das Arbeitsprogramm definiert neu gestartet wird.

Weiterhin ist ein Ein-/Ausgabe-Interface 29 vorgesehen, welches die Betätigung von Stellelementen, wie beispielsweise des Ventils 30 ebenso erlaubt wie das Einlesen eines Zustandschalters 31, der lediglich der Einfachheit halber als Einzelschalter dargestellt ist.

Eine Eingabetastatur 34 ermöglicht den Abruf unterschiedlicher Größen und Meßwerte wie beispielsweise:
1) den unkorrigierten Durchflußmengenwert (entsprechend dem mechanischen Zählwerk eines herkömmliches Durchflußmessers)
2) den temperatur- und gegebenenfalls druckkompensierten Durchflußmengenwert,
3) einen Differenzwert (entsprechend der Plus-Minus-Korrektur des mechanischen Zählers eines herkömmlichen Durchflußmessers)
4) die aktuelle Temperatur des Fluids
5) den aktuellen nicht kompensierten Volumenstrom und
6) den aktuellen kompensierten Volumenstrom.

Wird eine Taste der Eingabetastatur 34 betätigt, so wird zugleich ein Interrupt d generiert, der dem Prozessor 23 aus einem gegebenenfalls bestehenden "Schlafzustand" weckt. Bevorzugt ist für die Eingabetastatur 34 eine wasserdichte Folientastatur.

Die vorstehend genannten Werte und Meßgrößen können über ein Display 33 ausgelesen werden, über welches auch Störungs- und Statusmitteilungen zur Anzeige gelangen. Besonders geeignet ist eine stromsparende Flüssigkristallanzeige (LCD), die auch mit einer Hintergrundbeleuchtung ausgerüstet sein kann. Zum Zwecke der Stromersparnis wird das Display nach einer vorbestimmten Zeit automatisch abgeschaltet.

Das Modul 45 verfügt außerdem über eine serielle oder parallele, vorzugsweise jedoch serielle, Feldkreisschnittstelle nach RS 485-Norm, wobei zusätzlich vorteilhafterweise eine galvanische Trennung (beispielsweise ein Optokoppler) vorgesehen ist. Über diese Schnittstelle 36 kann wahlweise auch die Stromversorgung des Moduls 45 erfolgen.

Die Schnittstelle 35 ist mit einem Stecker 35 ausgerüstet und dient zur Einprogrammierung sämtlicher gerätespezifischer Kenndaten in das Modul. Daneben können über diese Schnittstelle auch die Meßwerte ausgelesen werden. Aus Gründen der Manipulationssicherheit ist die Schnittstelle über ein Passwort gesichert.

In dem dargestellten Ausführungsbeispiel ist an die Schnittstelle ein Feldbusnetz 41 angeschlossen, über welches mehrere Durchfluß-Meßgeräte in einem Ring zusammengeschlossen sind. Eine solche Ringschaltung ist von großem Vorteil, wenn das vorstehend beschriebene Durchfluß-Meßgerät als Gaszähler verwendet wird, wobei mehrere Teilnehmer in dem Netz zusammengeschlossen sind. Jedes der teilnehmenden Meßgeräte verfügt über eine eigene Adresse und kann somit selektiv von einem Controller 42 angesprochen werden. Dadurch ist es möglich, daß beispielsweise die Zählerinhalte der einzelnen Gaszähler zentral ausgelesen werden können. Außerdem können auf diese Weise selektiv Schaltelemente betätigt werden, wie beispielsweise das Ventil 30, das geschlossen werden kann, wenn ein Teilnehmer die Gebühren nicht bezahlt oder bei Vorliegen eines Katastrophenfalls, wie beispielsweise eines Brandes.

Der Controller 42 kann wahlweise über eine Verbindung 43 mit einem Telefon-Modem 44 verbunden werden, wodurch z.B. ganze Wohnblockeinheiten oder andere lokale Netze über Telefon angesprochen werden können.

Ein Programmier- und Auslesegerät 37 ermöglicht zudem an jeder Stelle des Netzes, wie auch direkt vor Ort, das Auslesen der Daten sowie das Umprogrammieren der Daten. Zu diesem Zweck ist das Gerät 37 mit einer alphanumerischen Anzeige 38 verbunden und mit einer Eingabetastatur versehen.

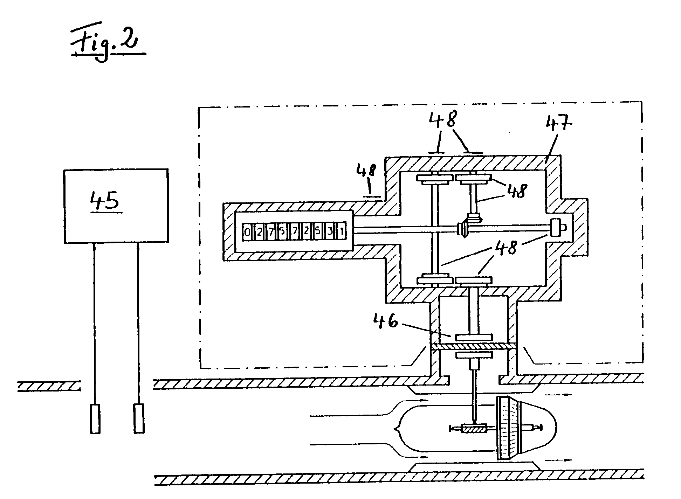

In Fig. 2 ist beispielsweise ein herkömmlicher mechanischer Durchflußmesser dargestellt, wobei der gestrichelte Bereich denjenigen Bereich des Durchflußmessers darstellt, an welchem der vorstehend anhand Fig. 1 beschriebene Durchflußmesser angekoppelt ist. Die Ankopplungsstelle befindet sich innerhalb eines Zählergehäuses 47, und geeignete Ankopplungsstellen für den Aufnehmer 1 sind mit dem Bezugszeichen 48 markiert.

## Patentansprüche

1. Durchfluß-Meßgerät mit einem Fühler zum Erfassen der Durchflußmenge eines Fluids,
einem Fühler (12, 13) zum Erfassen der Fluid-Temperatur einer von den Ausgangssignalen des Durchflußfühlers und des Temperatur-Fühlers beaufschlagten prozeßrechnergesteuerten Auswerteschaltung (45) zum Bestimmen der auf eine vorgegebene Bezugstemperatur kompensierten Fluid-Durchflußmenge, wobei die Auswerteschaltung (45) einen Schaltkreis (22) zur Überwachung eines Betriebsspannungsabfalls aufweist,
einer Einrichtung (33) zum Anzeigen und Aufzeichnen der Durchflußmenge und einer Spannungsversorgung (6) zum Betrieb der Auswerteschaltung.
dadurch **gekennzeichnet**,
daß durch den Schaltkreis (22) der Auswerteschaltung (45) sämtliche vor einem Betriebsspannnungsabfall aktuell ermittelten Daten abgespeichert und dann, wenn der Betriebsspannungsabfall eine vorgegebene Zeitdauer und/oder eine vorgegebenes Ausmaß überschreitet, ein Absperrventil betätigt wird,
daß eine Pufferbatterie (8) zum Überbrücken des Betriebsspannungsabfalls vorgesehen ist, welche als Akkumulator ausgebildet ist und über eine Ladeschaltung (5) geladen wird, die mit elektrischer Energie gespeist ist, welche mit Hilfe einer Aufbereitungsschaltung (4) durch einen mechanisch-elektrischen Wandler (3) aus der Bewegung eines mechanischen Durchflußfühlers (1, 2) gewonnen wird.

2. Durchfluß-Meßgerät nach Anspruch 1,
dadurch **gekennzeichnet**,
daß die aktuell ermittelten Daten zusammen mit Uhrzeit und Datum des Störfalles abgespeichert werden.

3. Durchfluß-Meßgerät nach Anspruch 1 oder 2,
dadurch **gekennzeichnet**,
daß die Auswerteschaltung (45) einen Schaltkreis (28) zur Erfassung eines nicht ordnungsgemäßen Funktionsablaufs umfaßt, der ein in einem Speicher (25) abgelegtes Arbeitsprogramm bei Auftreten einer Störung definiert neu startet.

4. Durchfluß-Meßgerät nach einem der Ansprüche 1 bis 3,
dadurch **gekennzeichnet**,
daß ein weiterer Fühler (18,19) zum Erfassen des Fluiddruckes vorgesehen ist, und daß die Auswerteschaltung (45) zusätzlich mit dem Ausgangssignal des Druckfühlers (18,19) beaufschlagt wird, um die Fluiddurchflußmenge auch mit Bezug auf einen vorgegebenen Bezugsdruck zu kompensieren.

5. Durchfluß-Meßgerät nach Anspruch 4,
dadurch **gekennzeichnet**,
daß die Temperatur- und Druckfühler (12,13,17,18) über Sicherheitsbarrieren (14) an die Auswerteschaltung (45) angeschlossen sind.

6. Durchfluß-Meßgerät nach einem der Ansprüche 1 bis 5,
dadurch **gekennzeichnet**,
daß der Temperatur-Fühler (12,13) so ausgebildet ist, daß er einen Temperatur-Gradienten im Fluidstrom mittelt.

7. Anordnung einer Mehrzahl der Durchfluß-Meßgeräte gemäß einem der Ansprüche 1 bis 6 in einem Ring mittels eines Feldbusnetzes (41), an das jedes Meßgerät über eine Schnittstelle (35) seiner Auswerteschaltung (45) angeschlossen ist.

8. Anordnung nach Anspruch 7,
**gekennzeichnet** durch
eine Absicherung jeder Schnittstelle (35) über ein Paßwort.

9. Anordnung nach Anspruch 7 oder 8,
dadurch **gekennzeichnet**,
daßdie Versorgung der Auswerteschaltung (45) über das gleiche Adernpaar der Feldbusschnittstelle (35) erfolgt.

10. Verwendung des Durchfluß-Meßgerätes nach einem der Ansprüche 1 bis 6 als Gaszähler.

11. Verwendung der Anordnung nach einem der Ansprüche 7 bis 9 für ein Heizgasverbundnetz.

## Claims

1. Flowmeter with a sensor for determining the flow quantity of a fluid, a sensor (12, 13) for determining the fluid temperature, a process computer-controlled evaluating circuit (45), to which the output signals of the flow sensor and temperature sensor for establishing the fluid flow quantity compensated to a predetermined reference temperature are transmitted, the evaluating circuit (45) having a circuit means (22) for monitoring an operating voltage drop, a device (33) for indicating and recording the flow quantity and voltage supply (6) for operating the evaluating circuit, characterized in that through the circuit means (22) of the evaluating circuit (45) all the currently determined data prior to an operating voltage drop are stored and then if the operating voltage drop exceeds a predetermined time period and/or a predetermined extent a shut-off valve is operated and that a buffer battery (8) is provided for bridging the operating voltage drop and which is constructed as an accumulator and is charged by means of a charging circuit (5), which is supplied with electrical energy, which is obtained with the aid of a processing circuit (4) through a mechanical-electric transducer (3) from the movement of a mechanical flow sensor (1, 2).

2. Flowmeter according to claim 1, characterized in that the currently determined data are stored together with the time and date of the fault case.

3. Flowmeter according to claim 1 or 2, characterized in that the evaluating circuit (45) incorporates a circuit means (28) for determining an incorrect operating sequence, which restarts in a clearly defined manner when a fault occurs the working program filed in a memory (25).

4. Flowmeter according to one of the claims 1 to 3, characterized in that a further sensor (18,19) is provided for determining the fluid pressure and that additionally the output signal of the pressure sensor (18,19) is applied to the evaluating circuit (45) in order to also compensate the fluid flow quantity with respect to a predetermined reference pressure.

5. Flowmeter according to claim 4, characterized in that the temperature and pressure sensors (12,13,17,18) are connected by means of safety barriers (14) to the evaluating circuit (45).

6. Flowmeter according to one of the claims 1 to 5, characterized in that the temperature sensor (12,13) is constructed in such a way that it determines a temperature gradient in the fluid flow.

7. Arrangement of a plurality of flowmeters according to one of the claims 1 to 6 in a ring by means of a field bus network (41), to which each flowmeter is connected by means of an interface (35) of its evaluating circuit (45).

8. Arrangement according to claim 7, characterized by the protection of each interface (35) by means of a password.

9. Arrangement according to claim 7 or 8, characterized in that the evaluating circuit (45) is supplied by means of the same pair of wires of the field bus interface (35).

10. Use of the flowmeter according to one of the claims 1 to 6 as a gas meter.

11. Use of the arrangement according to one of the claims 7 to 9 for a heating gas mixed network.

## Revendications

1. Débitmètre comprenant une sonde destinée à mesurer le débit d'un fluide,
une sonde (12, 13) destinée à mesurer la température du fluide, un circuit d'exploitation (45) piloté par microprocesseur et alimenté par les signaux de sortie de la sonde de débit et de la sonde de température, pour déterminer le débit du fluide compensé pour une température de référence prédéterminée, le circuit d'exploitation (45) présentant un circuit de commutation (22) destiné à surveiller une chute de la tension de travail,
un dispositif (33) d'affichage et de représentation du débit et une alimentation de tension (6) pour faire fonctionner le circuit d'exploitation,
***caractérisé en ce que***, du fait du circuit de commutation (22) du circuit d'exploitation (45), toutes les données déterminées en direct avant une chute de tension de travail sont mémorisées, et lorsque la chute de tension de travail dépasse une durée prédéterminée et/ou une amplitude déterminée, une vanne de fermeture est alors actionnée,
***en ce qu'***une pile tampon (8) est prévue pour shunter la chute de tension de travail, laquelle est conformée en accumulateur et est chargée par l'intermédiaire d'un circuit de charge (5) qui est alimenté en énergie électrique, laquelle est obtenue par un convertisseur mécano-électrique (3), à l'aide d'un circuit de traitement (4), à partir du mouvement d'une sonde mécanique de débit (1, 2).

2. Débitmètre selon la Revendication 1, ***caractérisé en ce que*** les données déterminées en direct sont mémorisées avec l'heure et la date de l'incident.

3. Débitmètre selon la Revendication 1 ou 2, ***caractérisé en ce que*** le circuit d'exploitation (45) englobe un circuit de commutation (28) destiné à déterminer un déroulement non correct du fonctionnement, qui relance de manière définie, en cas d'incident, un programme de travail stocké dans une mémoire (25).

4. Débitmètre selon l'une des Revendications 1 à 3, ***caractérisé en ce qu'***une autre sonde (18, 19) destinée à déterminer la pression du fluide est prévue, ***et en ce que*** le circuit d'exploitation (45) est alimenté en plus avec le signal de sortie de la sonde de pression (18, 19), pour compenser également le débit du fluide par rapport à une pression de référence prédéterminée.

5. Débitmètre selon la Revendication 4, ***caractérisé en ce que*** les sondes de température et de pression (12, 13, 17, 18) sont reliées au circuit d'exploitation (45) par l'intermédiaire de barrières de sécurité (14).

6. Débitmètre selon l'une des Revendications 1 à 5, ***caractérisé en ce que*** la sonde de température (12, 13) est conformée de telle manière qu'il effectue un gradient de température dans l'écoulement de fluide.

7. Disposition en anneau de plusieurs débitmètres selon l'une des Revendications 1 à 6 au moyen d'un réseau à bus local (41) auquel est relié chaque débitmètre par l'intermédiaire d'une interface (35) de son circuit d'exploitation (45).

8. Disposition selon la Revendication 7, ***caractérisée par*** une protection de chaque interface (35) par un mot de passe.

9. Disposition selon la Revendication 7 ou 8, ***caractérisée en ce que*** l'alimentation du circuit d'exploitation (45) se fait par la même paire de brins de l'interface (35) de bus local.

10. Utilisation du débitmètre selon l'une des Revendications 1 à 6 comme compteur à gaz.

11. Utilisation de la disposition selon l'une des Revendications 7 à 9 pour un réseau de branchement de gaz de chauffage.
